Europäisches Patentamt

European Patent Office

Office européen des brevets

(11) Veröffentlichungsnummer: **0 127 751**
**B1**

(12) **EUROPÄISCHE PATENTSCHRIFT**

(45) Veröffentlichungstag der Patentschrift :
04.03.87

(51) Int. Cl.⁴ : **B 23 B 49/00**, B 23 Q  3/155

(21) Anmeldenummer : **84104047.0**

(22) Anmeldetag : **11.04.84**

(54) Werkzeugbruch-Ueberwachungseinrichtung.

(30) Priorität : 02.06.83 CH 3017/83

(43) Veröffentlichungstag der Anmeldung :
12.12.84 Patentblatt 84/50

(45) Bekanntmachung des Hinweises auf die Patenterteilung : 04.03.87 Patentblatt 87/10

(84) Benannte Vertragsstaaten :
CH DE FR GB IT LI

(56) Entgegenhaltungen :
EP-A- 0 002 782
GB-A- 1 437 145
US-A- 2 677 168

(73) Patentinhaber : Werkzeugmaschinenfabrik Oerlikon-
Bührle AG
Birchstrasse 155
CH-8050 Zürich (CH)

(72) Erfinder : Recher, Kurt
Probsteistrasse 103
CH-8051 Zürich (CH)

## Beschreibung

Die Erfindung betrifft eine Werkzeugbruch-Ueberwachungseinrichtung an einer Werkzeugmaschine, gemäss dem Oberbegriff des Patentanspruches.

Es sind Werkzeugbruch-Ueberwachungseinrichtungen dieser Art bekannt (siehe EP-A-0 002-782), bei denen die Ueberwachung des Werkzeuges einen Unterbruch der Bearbeitung des Werkstückes bewirkt. Eine Ueberwachung des in der Arbeitsspindel befindlichen Werkzeuges ist jedoch umständlich und benötigt Zeit, die für die Bearbeitung des Werkstückes verloren geht. Es ist wesentlich, dass durch die Ueberwachung der Werkzeuge auf Bruch oder sonstige Beschädigung der Arbeitsgang nicht unterbrochen werden muss. Zum Ueberwachen des Werkzeuges in der Arbeitsspindel ist es notwendig, die Arbeitsspindel in eine für diese Ueberwachung geeignete Stellung zu bringen. Dies erfordert eine zusätzliche Programmierung der Arbeitsspindel.

Die Aufgabe, die mit der vorliegenden Erfindung gelöst werden soll, besteht in der Schaffung einer Ueberwachungseinrichtung, welche die Bearbeitung des Werkstückes nicht behindert und welche möglichst einfach im Aufbau und in der Steuerung, d. h. Programmierung ist. Diese Aufgabe wird durch eine Ueberwachungseinrichtung gelöst, welche ausser den Merkmalen im Oberbegriff des Patentanspruches auch die Merkmale im Kennzeichen dieses Anspruches aufweist.

Diese erfindungsgemässe Werkzeugbruch-Ueberwachungseinrichtung hat folgende Vorteile :

Die Ueberwachung des Werkzeuges, z. B. das Messen der Werkzeuglänge, erfolgt ausserhalb des Bereiches der Arbeitsspindel.

Die Einrichtung kann am Werkzeugmagazin befestigt werden, wo sie nicht die Bearbeitung des Werkstückes behindert. Es ist keine besondere Programmierung erforderlich. Es entsteht kein Verlust an Haupt- oder Nebenzeit bei der Bearbeitung eines Werkstückes, denn die Ueberwachung erfolgt während der Bearbeitung des Werkstückes. Das Ueberwachungsprinzip besteht in einer Werkzeuglängenmessung vor und nach dem Einsatz des Werkzeuges und in einem Vergleich der beiden Längenmessungen. Die tatsächliche Länge des Werkzeuges ist somit ohne Bedeutung.

Ein Ausführungsbeispiel der erfindungsgemässen Werkzeugbruch-Ueberwachungseinrichtung ist im folgenden anhand der beigefügten Zeichnung ausführlich beschrieben. Es zeigt :

Figur 1 eine Werkzeugmaschine in Ansicht,
Figur 2 eine Ueberwachungseinrichtung in perspektivischer Darstellung mit der elektronischen Steuerung, in schematisch stark vereinfachter Darstellung.

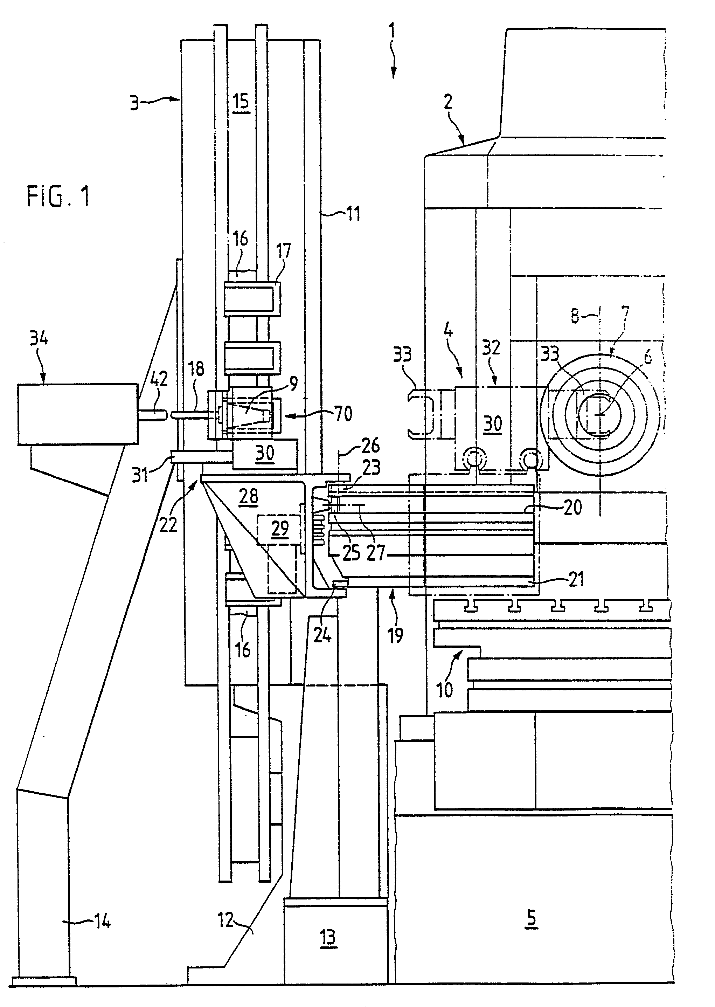

Gemäss Fig. 1 weist die Werkzeugmaschine einen Maschinenständer 2 auf, sowie ein Werkzeugmagazin 3 und einen Werkzeugwechsler 4. Der Maschinenständer 2 ist auf einem Grundgestelle 5 in Richtung der Achse 6 einer Arbeitsspindel 7 verschiebbar. Zu diesem Zweck sind auf dem Grundgestell 5 nicht dargestellte Führungsschienen vorhanden. Die Arbeitsspindel 7 ist auf dem Maschinenständer 2 in vertikaler Richtung längs einer Achse 8 verschiebbar. Die Arbeitsspindel 7 enthält eine an sich bekannte und hier daher nicht näher dargestellte Vorrichtung zur Aufnahme und zum Festhalten von Werkzeugen. Insbesondere kann diese Vorrichtung zur Aufnahme von Werkzeugen ausgebildet sein, die einen Konus 9 von bestimmter Länge und mit einem bestimmten Oeffnungswinkel aufweisen. Der Antrieb der Arbeitsspindel 7 erfolgt, in an sich bekannter Weise, durch einen hier nicht dargestellten Motor. Die Werkzeugmaschine 1 besitzt ferner einen drehbaren und verschiebbaren Drehtisch 10, auf dem Werkstücke aufgespannt werden. Der Drehtisch 10 befindet sich vor dem Maschinenständer 2 und ist ebenfalls in an sich bekannter Weise auf Führungen verschiebbar gelagert und kann quer zur Achse 6 der Arbeitsspindel 7 verschoben werden. Das Werkzeugmagazin 3 besitzt einen Magazinständer 11, der sich auf einem Magazinsockel 12 befindet. Neben dem Magazinsockel 12 befindet sich ein Sockel 13 zur Aufnahme des Werkzeugwechslers 4. Der Magazinständer 11 ist ferner durch eine Stütze 14 gehalten. Am Magazinständer 11 ist eine Führungsschiene 15 für eine umlaufende Endloskette 16 befestigt. An der Endloskette 16 sind Halter oder Behälter zur Aufnahme der Werkzeuge 18 befestigt. Die Endloskette 16 wird über zwei Kettenräder geführt, von denen eines durch einen Motor angetrieben ist. Diese Anordnung der Endloskette 16 mit den Kettenrädern, dem Motor und der zugehörigen Steuerung ist ebenfalls an sich bekannt und daher hier nicht näher beschrieben und auch nicht dargestellt.

Der Werkzeugwechsler 4 weist die folgenden, nachfolgend beschriebenen Teile auf :

Eine horizontal angeordnete Schiene 19, die zwei Laufflächen 20 und 21 besitzt, auf denen ein Schlitten 22 mit Rollen 23, 24 und 25 verschiebbar gelagert ist. Die Rollen 23 und 24 dienen zur Führung des Schlittens 22 in horizontaler Richtung und weisen vertikale Rollenachsen 26 auf. Die Rollen 25 dienen der vertikalen Führung des Schlittens 22 auf der Schiene 19 und weisen entsprechend waagrechte Rollenachsen 27 auf. Von jeder der Rollen 23, 24 und 25 sind längs des Schlittens zwei Stück angeordnet, die auf den entsprechenden Laufflächen 20 und 21 abrollen. Der Schlitten 22 besitzt ein Schlittengestell 28, an dem die Rollen 23, 24 und 25 gelagert sind, sowie einen Motor 29, zur Verschiebung des Schlittens 22. Auf dem Schlittengestell 28 sind zwei Führungsstangen 31 befestigt, an denen ein zweiter Schlitten 30 verschiebbar auf dem Schlittengestell 28 geführt ist. Der erste Schlitten 22 wird somit horizontal entlang der Schiene 19 geführt und der zweite Schlitten 30 wird quer dazu entlang den Führungsstangen 31 ebenfalls horizontal geführt. Auf dem zweiten Schlitten ist ein zweiarmiger Greifer 32 schwenkbar gelagert. An jedem Arm des Greifers 32 ist eine Greiferzange 33 befestigt. Diese beiden Zangen 33 dienen dazu, ein Werkzeug 18 am Konus 9 zu ergreifen und von der Arbeitsspindel 7 zum Magazin 3 zu transportieren und gleichzeitig ein weiteres Werkzeug 18 vom Magazin 3 zur Arbeitsspindel 7 zu bringen.

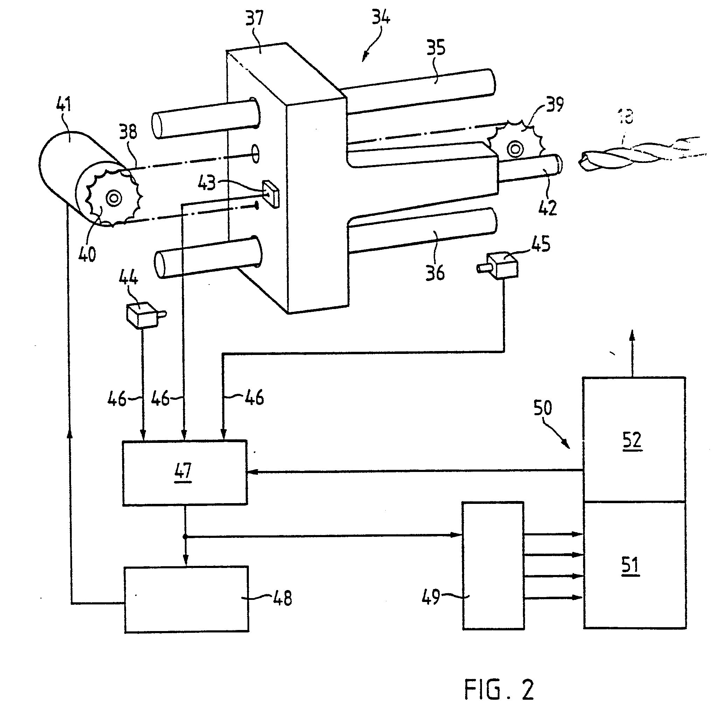

An der Stütze 14 ist ein Tastorgan 34 befestigt, das einen Taststift 42 aufweist, der gegen das Werkzeug 18 verschiebbar ist, wie anhand der Fig. 2 im folgenden beschrieben ist.

Gemäss Fig. 2 sind in einem nicht dargestellten Gehäuse des Tastorganes 34 zwei Führungsstangen 35 und 36 befestigt. Auf diesen Führungsstangen 35 und 36 ist ein Schlitten 37 verschiebbar geführt. Zur Verschiebung des Schlittens 37 ist an diesem eine Endloskette 38 befestigt, welche über zwei Kettenräder 39 und 40 gespannt ist, die im erwähnten Gehäuse drehbar gelagert sind. Das eine Kettenrad 40 ist von einem Schrittschaltmotor 41 angetrieben. Im Schlitten 37 ist ein Taststift 42 verschiebbar gelagert, der zum Abtasten des Werkzeuges 18, insbesondere eines Bohrers dient. Das hintere Ende des Taststiftes 42 stützt sich auf einem elektrischen Schalter 43 ab, der ebenfalls am Schlitten 37 befestigt ist. Die Verschiebung des Schlittens 37 ist durch zwei Endschalter 44 und 45 begrenzt. Die soeben erwähnten Schalter 43, 44 und 45 sind über Leitungen 46 an eine Steuerlogik 47 angeschlossen. Diese Steuerlogik ist einerseits an ein Steuerorgan 48 für den Schrittmotor 41 angeschlossen und anderseits an ein Zählwerk 49, mit dem die Schritte des Schrittmotors 41 gezählt werden. An die Steuerlogik 47 und an das Zählwerk 49 ist ein Rechner 50 angeschlossen, der einen Speicher 51 und einen Vergleicher 52 enthält.

Das beschriebene Tastorgan 34 stellt nur eines von vielen möglichen Ausführungsformen dar. Statt der mechanischen Abtastung des Werkzeuges 18 ist eine induktive Abtastung oder eine Abtastung mit Lichtstrahl und Photozelle denkbar. Statt der Verschiebung des Schlittens 37 durch eine Endloskette 38 kann eine Zahnstange verwendet werden, die mit einem vom Schrittmotor 41 angetriebenen Zahnrad in Eingriff steht. Der Taststift 42 könnte auch hydraulisch oder pneumatisch gegen das Werkzeug 18 bewegt werden.

Die Wirkungsweise der beschriebenen Werkzeugbruch-Ueberwachungseinrichtung ist wie folgt :

Zum Austausch eines sich in der Arbeitsspindel 7 befindlichen Werkzeuges 18 gegen ein sich im Werkzeugmagazin 3 befindliches Werkzeug 18 sind folgende Vorgänge notwendig :

Zuerst wird die Endloskette 16 in die erforderliche Stellung gebracht, in welcher das gewünschte Werkzeug 18 von der Greiferzange 33 erfasst werden kann. Während sich die Endloskette 16 bewegt, befindet sich der Schlitten 22 in einer Parkstellung neben dem Werkzeugmagazin 3, die in der Zeichnung nicht näher dargestellt ist. In dieser Parkstellung des Schlittens 22 mit dem Werkzeugwechsler 4 kann die Endloskette 16 bewegt werden, ohne mit den Greiferzangen 33 des Greifers 32 in Berührung zu kommen. Hat das Werkzeug 18 diese in Fig. 1 dargestellte Position 70 erreicht, wird der Schlitten 22 in seine Endstellung bewegt, in welcher die erste Greifzange 33 das Werkzeug 18 aus dem Werkzeugmagazin 3 entnehmen kann. Während des Einfahrens in die Endstellung ergreift die Greiferzange 33 das im Magazin 3 befindliche Werkzeug 18 am Konus 9. Anschliessend fährt der Schlitten 22 in seine soeben erwähnte Parkstellung. Dort kann z. B. der Konus 9 des Werkzeuges 18 durch nicht näher dargestellte, aber bekannte Mittel gereinigt werden. Anschliessend fährt der Schlitten 22 in eine der Arbeitsspindel 7 zugeordnete Endstellung, welche in Fig. 1 mit strichpunktierten Linien angedeutet ist. Dies setzt voraus, dass der Maschinenständer 2 und die Arbeitsspindel 7 in die richtige Lage gebracht werden, wie in Fig. 1 dargestellt ist, d. h. die Arbeitsspindel 7 muss in Richtung der Achse 8 vertikal und der Maschinenständer 2 muss in Richtung der Achse 6 der Arbeitsspindel in die erforderliche Stellung gebracht werden, damit die Arbeitsspindel 7 sich in der Höhe der Greiferzange 33 befindet. Beim Einfahren des Schlittens 22 in die genannte Endstellung hat die zweite noch leere Greiferzange 33 das in der Arbeitsspindel 7 befindliche Werkzeug 18 erfasst. Der zweite Schlitten 30 kann nun auf den Führungen 31 vorgeschoben werden, wodurch das Werkzeug 18 aus der Arbeitsspindel 7 herausgezogen wird. In der vorderen Stellung des zweiten Schlittens 30 kann der zweiarmige Greifer 32 um 180° geschwenkt werden, so dass nun das neue Werkzeug 18 vor die Arbeitsspindel 7 zu stehen kommt. Der zweite Schlitten 30 wird wieder in seine hintere Stellung zurückbewegt und das neue Werkzeug 18 wird in die Arbeitsspindel 7 eingesetzt. Der Schlitten 22 wird nun in die andere Endstellung gebracht und das « alte » Werkzeug 18 wird in den Halter oder Behälter 17 der Endloskette 16 zurückgeführt. Die Greiferzange 33 gibt den Konus 9 frei. Anschliessend gelangt der Schlitten 22 in die Parkstellung zurück und der Werkzeugwechsler 4 ist für einen weiteren Werkzeugwechsel bereit.

Bei dem beschriebenen Werkzeugwechsel wird die Werkzeugbruch-Ueberwachung wie folgt durchgeführt :

Sobald sich die Endloskette 16 des Werkzeugmagazins 3 in die für den Werkzeugwechsel erforderliche Stellung bewegt hat, wird die Länge des in die Arbeitsspindel 7 einzusetzenden Werkzeuges 18 gemessen. Anschliessend wird das gemessene Werkzeug 18 in die Arbeitsspindel 7 eingesetzt und die Bearbeitung eines Werkstückes durchgeführt. Nach der Bearbeitung wird das Werkzeug 18 wieder in den Behälter 17 der Endloskette zurücktransportiert und nochmals gemessen. Falls das Werkzeug nach der Bearbeitung nicht mehr dieselbe Länge besitzt, wie vor der Bearbeitung des Werkstückes, muss es ausgeschieden werden.

Zum Messen der Werkzeuglänge, vor der Bearbeitung eines Werkstückes, wird der Schrittmotor 41 eingeschaltet, sobald die Endloskette 16 die erforderliche Stellung erreicht hat, wie weiter oben beschrieben. Durch das Einschalten des Schrittmotors 41 beginnt sich einerseits der Schlitten 37 mit dem Taststift 42 gegen das Werkzeug 18 zu bewegen und andererseits werden im Zählwerk 49 die Schritte des Schrittmotors 41 gezählt und im Speicher 51 gespeichert. Sobald der Taststift 42 gegen das Werkzeug 18 stösst, wird der Schalter 43 betätigt und über die Steuerlogik wird der Schrittmotor 41 augeschaltet und im Speicher 51 ist der Messwert für die Werkzeuglänge gespeichert. Nach der Bearbeitung des Werkstückes, wenn das Werkzeug 18 wieder in den Behälter 17 der Endloskette 16 gelangt ist, wird der Messvorgang wiederholt und im Speicher 51 wird ein neuer Messwert gespeichert. Die beiden Messwerte werden im Vergleicher 52 verglichen. Ueberschreitet die Differenz der beiden Messwerte einen gegebenen Toleranzwert, dann wird ein Signal erzeugt, das z. B. das Auswechseln des Werkzeuges bewirkt.

Die Abtastvorrichtung 34 könnte anstatt beim Werkzeugmagazin 3 auch im Bereich der Fördervorrichtung 22 angeordnet sein.

Bezugsziffernliste

1 Werkzeugmaschine
2 Maschinenständer
3 Werkzeugmagazin
4 Werkzeugwechsler
5 Grundgestell
6 Achse
7 Arbeitsspindel
8 Achse
9 Konus
10 Drehtisch
11 Magazinständer
12 Magazinsockel
13 Sockel
14 Stütze
15 Führungsschiene
16 Endloskette
17 Behälter
18 Werkzeug
19 Schiene
20 Lauffläche
21 Lauffläche
22 Schlitten (erster)
23 Rollen
24 Rollen
25 Rollen
26 Rollenachsen
27 Rollenachsen
28 Schlittengestell
29 Motor
30 Schlitten (zweiter)
31 Führungsstangen
32 zweiarmiger Greifer
33 Greiferzange

34 Tastorgan (Abtastvorr.)
35 Führungsstange
36 Führungsstange
37 Schlitten
38 Endloskette
39 Kettenrad
40 Kettenrad
41 Schrittmotor
42 Taststift
43 elektr. Schalter
44 Endschalter
45 Endschalter
46 Leitung
47 Steuerlogik
48 Steuerorgan
49 Zählwerk
50 Rechner
51 Speicher
52 Vergleicher.

**Patentansprüche**

1.  Werkzeugbruch-Ueberwachungseinrichtung an einer Werkzeugmaschine (1) enthaltend :
eine Werkzeugwechseleinrichtung (4) mit
einem Werkzeugmagazin (3) zur Aufnahme von Werkzeugen (18), vorzugsweise Bohrwerkzeugen,
einer Fördervorrichtung (22) zum Transport des Werkzeuges (18) vom Werkzeugmagazin (3) zu einer Arbeitsspindel (7) für die Bearbeitung eines Werkstückes und zurück zum Werkzeugmagazin (3) nach der Bearbeitung des Werkstückes,
eine Abtastvorrichtung (34) zum Messen der Werkzeuglänge,
dadurch gekennzeichnet, dass
die Abtastvorrichtung (34) sich im Bereich des Werkzeugmagazins (7) befindet,
die Abtastvorrichtung (34) einen Speicher (51) aufweist zum Speichern des Messwertes, der vor dem Einsatz des Werkzeuges (18) in die Arbeitsspindel (7) gemessenen Werkzeuglänge und
die Abtastvorrichtung (34) einen Vergleicher (52) aufweist, um den Messwert der vor dem Einsatz des Werkzeuges (18) in die Arbeitsspindel (7) gemessene Werkzeuglänge mit dem Messwert, der nach der Entnahme des Werkzeuges (18) aus der Arbeitsspindel (7) gemessenen Werkzeuglänge zu vergleichen und zum Erzeugen eines Signals, wenn die Differenz der Messwerte der genannten beiden Werkzeuglängen einen gegebenen Differenzwert überschreitet.

2.  Werkzeugbruch-Ueberwachungseinrichtung nach Anspruch 1, dadurch gekennzeichnet, dass die Abtastvorrichtung (34) in Achsrichtung des Werkzeuges (18) gegen dasselbe verschiebbar angeordnet ist.

3.  Werkzeugbruch-Ueberwachungseinrichtung nach Anspruch 1 dadurch gekennzeichnet, dass das Werkzeug (18) in seiner Achsrichtung gegen die Abtastvorrichtung (34) verschiebbar angeordnet ist.

4.  Werkzeugbruch-Ueberwachungseinrichtung nach Anspruch 2, dadurch gekennzeichnet, dass die Abtastvorrichtung (34) einen Schlitten (37) aufweist, der auf Führungsstangen (35, 36) verschiebbar angeordnet ist und dass zur Verschiebung des Schlittens (37) eine endloskette (38) über zwei Kettenräder (39, 40) gespannt ist, von denen das eine Kettenrad (40) durch einen Motor (41) angetrieben ist.

5.     Werkzeugbruch-Ueberwachungseinrichtung nach Anspruch 4, dadurch gekennzeichnet, dass auf dem Schlitten (37) ein federbelasteter Taststift (42) verschiebbar angeordnet ist, sowie ein induktiver Näherungsschalter (43), der auf eine Verschiebung des Taststiftes (42) anspricht.

6.     Werkzeugbruch-Ueberwachungseinrichtung nach Anspruch 4, dadurch gekennzeichnet, dass der Motor (41) zum Antrieb der Endloskette (38) als Schrittmotor ausgebildet ist, der mit einem Zählwerk (49) verbunden ist.

7.     Werkzeugbruch-Ueberwachungseinrichtung nach Anspruch 6, dadurch gekennzeichnet, dass ein Endschalter (44) angeordnet ist, der zu Beginn der Verschiebung des Schlittens (37) das Zählwerk einschaltet und dass der Näherungsschalter (43) mit dem Zählwerk verbunden ist zum Anschalten desselben am Ende der Verschiebung.

8.     Werkzeugbruch-Ueberwachungseinrichtung nach Anspruch 1, dadurch gekennzeichnet, dass die Abtastvorrichtung eine Lichtquelle und eine Photozelle zum Abtasten des Werkzeuges (18) aufweist.

## Claims

1. A tool-breakage monitoring device for a machine tool (1) comprising :
a tool changer device (4), including :
a tool storage magazine (3) for storing tools (18) preferably boring tools,
a transport apparatus (22) for transporting tools (18) from said tool storage magazine (3) to a machining spindle (7) of the machine tool (1) for machining a workpiece, and from the machining spindle (7) back to the tool storage magazine (3), after machining the workpiece,
a sensing device (34) for measuring the length of the tool (18),
characterised in that
said sensing device (34) being located near the tool storage magazine (3)
the sensing device (34) comprising a storage register (51) for storing a value of the length of the tool measured before inserting the tool (18) in the machine spindle (7) and
the sensing device (34) comprising a comparator (52) for comparing the measured value of the length of the tool (18) measured before inserting the tool (18) in the machining spindle (7) with a measured value of the length of the tool (18) measured after removing the tool (18) from the machining spindle (7) and for generating a signal, when the difference between the measured values of the two lengths exceeds a given differential value defining a prescribed tolerance.

2. The tool-breakage monitoring device as defined in claim 1, characterised in that means are provided for translating said sensing device (34) substantially in the direction of an axis of the tool (18) toward the latter.

3. The tool-breakage monitoring device as defined in claim 1, characterised in that means are provided for translating the tool (18) and said sensing device (34) relative to one another.

4. The tool-breakage monitoring device as defined in claim 2, characterised in that said sensing device (34) comprises a carriage (37), translatably mounted on guide rails (35, 36), an endless drive chain (38) running over two chain drive sprockets (39, 40) for translating said carriage (37) and a motor (41) driving one of the two chain drive sprockets (39, 40).

5. The tool-breakage monitoring device as defined in claim 4, characterised in that a spring loaded sensing pin (42) is mounted translatably in said carriage (37) and an inductive proximity switch (43) is responsive to translation of said spring-loaded sensing pin (42).

6. The tool-breakage monitoring device as defined in claim 4, characterised in that said motor (41) comprises a stepping motor and said sensing device (34) comprises a counter (49) operatively connected to said stepping motor.

7. The tool-breakage monitoring device as defined in claim 6, characterised in that a limit switch (44) cooperates with said sensing device (34), said limit switch (44) enables said counter (49) when said carriage (37) begins to translate, and said inductive proximity switch (43) is connected to the counter (49) for controlling the latter when the carriage (37) terminates translating.

8. The tool-breakage monitoring device as defined in claim 1, characterised in that said sensing device (34) comprises a light source and a photo-electric cell arrangement for sensing the length of the tool (18).

## Revendications

1. Installation de surveillance de rupture d'outils pour une machine-outil (1) comportant :
une installation de remplacement d'outils (4), avec
un magasin d'outils (3) pour recevoir des outils (18) de préférence des forets,
un dispositif de transfert (22) pour transporter l'outil (18) du magasin d'outils (3) vers une broche (7) pour l'usinage d'une pièce et en retour vers le magasin d'outils (3) à la fin de l'usinage de la pièce,
un dispositif de détection (34) pour mesurer la longueur de l'outil,
caractérisée en ce que :
le dispositif de détection (34) se trouve au niveau du magasin à outils (3),
le dispositif de détection (34) comporte une mémoire (51) pour enregistrer une grandeur de mesure correspondant à la longueur de l'outil mesurée avant la mise en place de l'outil (18) dans la broche (7), et

le dispositif de détection (34) comporte un comparateur (52) pour comparer la grandeur de mesure de la longueur de l'outil mesurée avant la mise en place de l'outil (18) dans la broche (7) et la grandeur de la longueur de l'outil mesurée après enlèvement de l'outil (18) de la broche (7) et pour générer un signal si la différence des grandeurs de mesure des longueurs d'outil ci-dessus dépasse une différence prédéterminée.

2. Installation de surveillance de rupture d'outils selon la revendication 1, caractérisée en ce que le dispositif de détection (34) est monté coulissant par rapport à l'outil (18) dans la direction axiale de l'outil.

3. Installation de surveillance de rupture d'outils selon la revendication 1, caractérisée en ce que l'outil (18) est monté coulissant dans sa direction axiale par rapport au dispositif de détection (34).

4. Installation de surveillance de rupture d'outils selon la revendication 2, caractérisée en ce que le dispositif de détection (34) comporte un chariot (37) monté coulissant sur des tiges de guidage (35, 36) et en ce que pour déplacer le chariot (37), il est prévu une chaîne sans fin (38) tendue sur deux roues à chaîne (39, 40) dont une roue à chaîne (40) est entraînée par un moteur (41).

5. Installation de surveillance de rupture d'outils selon la revendication 4, caractérisée par une tige de détection (42) à ressort, montée coulissante sur le chariot (37) et un commutateur de proximité (43) inductif mis en œuvre par le coulissement de la tige de détection (42).

6. Installation de surveillance de rupture d'outils selon la revendication 4, caractérisée en ce que le moteur (41) d'entraînement de la chaîne sans fin (38) est un moteur pas à pas relié à un dispositif de comptage (49).

7. Installation de surveillance de rupture d'outils selon la revendication 6, caractérisée par un commutateur de fin de course (44) qui met en œuvre le dispositif de comptage au début de la translation du chariot (37) et en ce que le commutateur de proximité (44) est relié au dispositif de comptage pour brancher celui-ci à la fin de la translation.

8. Installation de surveillance de rupture d'outils selon la revendication 1, caractérisée en ce que le dispositif de détection comporte une source lumineuse et une cellule photo-électrique pour détecter l'outil (18).

FIG. 1

FIG. 2